# EUROPEAN PATENT APPLICATION

(11) **EP 4 617 537 A1**
(43) Date of publication of application: **17.09.2025**
(21) Application number: 23888780.6
(22) Date of filing: 09.11.2023
(51) Int. Cl.: F16L 11/22, B01D 61/00, B01D 63/06, B01D 71/32, B29C 65/02

(54) **TUBE UNIT, DEAERATION MODULE, AND METHOD FOR PRODUCING TUBE UNIT**

(30) Priority: 11.11.2022 JP 2022181178
(71) Applicant: DIC Corporation, Tokyo 174-8520 (JP)
(72) Inventor: KAWASHIMA Kazuyasu, Ichihara-shi, Chiba 290-8585 (JP); OI Kazumi, Ichihara-shi, Chiba 290-8585 (JP); SATO Akira, Ichihara-shi, Chiba 290-8585 (JP)
(74) Representative: TBK
(86) International application number: PCT/JP2023/040467
(87) International publication number: WO 2024/101435

(57) **Abstract**

A deaeration module 1 includes a tube unit 3 in which both end portions of a plurality of tubes 2 are bundled by a first bundling portion 5a and a second bundling portion 5b, and a housing 4 that houses the tube unit 3. Each of the plurality of tubes 2 is a tubular film through which gas permeates but liquid does not permeate, and the housing 4 includes an internal-space first through hole 15 and an internal-space second through hole 16 that communicate with an internal space A1 of each of the plurality of tubes 2 and into which bundling portions 5 are inserted, and an external-space through hole 20 that communicates with an external space A2 of the plurality of tubes 2. The tube unit 3 includes the plurality of tubes 2, the bundling portions 5 that bundle end portions 2c of the plurality of tubes 2, and an auxiliary member 6 extending in a solid rod shape and bundled by the bundling portion 5 together with the end portions 2c of the plurality of tubes 2.

## Description

### TECHNICAL FIELD

The present disclosure relates to a tube unit in which end portions of a plurality of tubes are bundled by a bundling portion, a deaeration module including the tube unit, and a method for producing the tube unit. This application claims the priority of JP 2022-181178 filed on November 11, 2022, the entire disclosure of which is incorporated herein by reference.

### BACKGROUND ART

Patent Document 1 describes a tube unit in which end portions of a plurality of fluorine resin tubes are bundled by a bundling portion (joining portion). This tube unit includes the plurality of fluorine resin tubes bundled together, a fluorine resin sleeve externally fitted to an end portion of the bundle of the fluorine resin tubes, and the bundling portion that is made of a heat-flowable fluorine resin and integrally joins the plurality of fluorine resin tubes and the fluorine resin sleeve. When the tube unit is produced, the plurality of fluorine resin tubes, each of which includes an end portion externally fitted with a heat-shrinkable tube made of a heat-flowable fluorine resin, are bundled together, the fluorine resin sleeve is externally fitted to the end portion of the bundle of the fluorine resin tubes, and this end portion is heated to a temperature equal to or higher than the melting point of the heat-shrinkable tube in order to melt the heat-shrinkable tube while shrinking it. Then, the heat-flowable fluorine resin of the heat-shrinkable tube is cooled and solidified to join and integrate the fluorine resin tubes and the fluorine resin sleeve.

### CITATION LIST

### PATENT LITERATURE

Patent Document 1: JP 01-131392 A

### SUMMARY OF INVENTION

### TECHNICAL PROBLEM

In a deaeration device including such a tube unit, a bundling portion of the tube unit is joined to a connector of a housing. Specifically, a circular through hole is formed in the connector, and the bundling portion of the tube unit is inserted into the through hole to join the bundling portion of the tube unit to the connector. Thus, the bundling portion of the tube unit is preferably not flattened.

Incidentally, for example, when degassing of an expensive liquid is performed, there is a demand for reducing the number of tubes in order to reduce an amount of the liquid discharged from a tube unit. However, when the number of tubes is reduced, the bundling portion is more likely to be flattened due to heat shrinkage of the heat-shrinkable tube, and a gap is more likely to be formed between the connector and the bundling portion. For example, when the number of tubes is two, the bundling portion is significantly flattened, and a large gap is likely to be formed between the connector and the bundling portion.

Thus, an object of an aspect of the present disclosure is to provide a tube unit capable of suppressing flattening of a bundling portion that bundles a plurality of tubes, a deaeration module including the tube unit, and a method for producing the tube unit.

### SOLUTION TO PROBLEM

[1] A tube unit according to an aspect of the present disclosure includes a plurality of tubes, a bundling portion that bundles end portions of the plurality of tubes, and an auxiliary member extending in a solid rod shape and bundled by the bundling portion together with the end portions of the plurality of tubes.
   In the tube unit, the auxiliary member extending in the solid rod shape is bundled by the bundling portion together with the end portions of the plurality of tubes. The auxiliary member is bundled by the bundling portion together with the end portions of the plurality of tubes, as a dummy of the tube. Therefore, even if the number of the tubes is small, the bundling portion can be easily formed into a circular shape. As a result, flattening of the bundling portion can be suppressed.
[2] The tube unit according to [1] may include a plurality of the auxiliary members. In the tube unit, even when the flattening of the bundling portion cannot be sufficiently suppressed by only one of the auxiliary members, the flattening of the bundling portion can be sufficiently suppressed by providing a plurality of the auxiliary members.
[3] In the tube unit according to [1] or [2], the end portions of the plurality of tubes and the auxiliary member may be arranged to form a honeycomb-like structure. In the tube unit, by arranging the end portions of the plurality of tubes and the auxiliary member to form the honeycomb-like structure, the flattening of the bundling portion can be suppressed.
[4] In the tube unit according to any one of [1] to [3], the end portions of the plurality of tubes and the auxiliary member may be arranged in a regular polygonal shape. In the tube unit, by arranging the end portions of the plurality of tubes and the auxiliary member in the regular polygonal shape, the flattening of the bundling portion can be suppressed.
[5] In the tube unit according to any one of [1] to [4], the auxiliary member may have a circular outer peripheral surface, and an outer diameter of the auxiliary member may be from 50% to 150% of an outer diameter of each of the plurality of tubes. In the tube unit, since the auxiliary member has the circular outer peripheral surface and the outer diameter of the auxiliary member is from 50% to 150% of the outer diameter of each of the plurality of tubes, the auxiliary member can be appropriately used as the dummy of the tube.
[6] In the tube unit according to any one of [1] to [5], the bundling portion may include an outer cylinder externally fitted to the end portions of the plurality of tubes and the auxiliary member, and a sealing portion filled between the end portions of the plurality of tubes, the auxiliary member, and the outer cylinder. In the tube unit, since the sealing portion is filled between the end portions of the plurality of tubes, the auxiliary member, and the outer cylinder, when a fluid such as a liquid or a gas is supplied from the end surface of the bundling portion, the fluid can be suppressed from leaking out between the end portion of the plurality of tubes, the auxiliary member, and the outer cylinder.
[7] In the tube unit according to [6], a melting point of the sealing portion may be lower than melting points of the plurality of tubes, the auxiliary member, and the outer cylinder. In the tube unit, the melting point of the sealing portion is lower than the melting points of the plurality of tubes, the auxiliary member, and the outer cylinder. Thus, at the time of producing the tube unit, it is possible to melt the sealing portion without melting the plurality of tubes, the auxiliary member, and the outer cylinder by performing heating at a temperature higher than the melting point of the sealing portion and lower than the melting points of the plurality of tubes, the auxiliary member, and the outer cylinder. As a result, the sealing portion can be appropriately filled between the plurality of tubes, the auxiliary member, and the outer cylinder while appropriately maintaining a state in which the outer cylinder is externally fitted to the plurality of tubes and the auxiliary member.
[8] In the tube unit according to [6] or [7], the end portions of the plurality of tubes and the auxiliary member may be separated from each other. In the tube unit, since the end portions of the plurality of tubes and the auxiliary member are separated from each other, the end portions of the plurality of tubes and the auxiliary member obtain a state of being covered with the sealing portion. As a result, it is possible to further suppress leakage of the fluid from boundary surfaces of the end portions of the plurality of tubes and the auxiliary member.
[9] In the tube unit according to any one of [1] to [8], the plurality of tubes may contain a fluorine resin. In the tube unit, since the plurality of tubes contain the fluorine resin, chemical resistance can be improved.
[10] In the tube unit according to any one of [1] to [9], the bundling portion may include a first bundling portion that bundles the end portions on one side of the plurality of tubes, and a second bundling portion that bundles the end portions on another side of the plurality of tubes, and the auxiliary member may extend from the first bundling portion to the second bundling portion. When the plurality of tubes are bent or wound in a circular shape to be housed in the housing or the like, there is a possibility that some or all of the plurality of tubes may be broken. Further, the thinner the thickness of each of the plurality of tubes, the smaller the diameter of each of the plurality of tubes, and the smaller the number of the plurality of tubes, the more likely it is that some or all of the plurality of tubes may be broken. However, in the tube unit, since the auxiliary member extends from the first bundling portion to the second bundling portion, the auxiliary member serves as a guide member or a reinforcing member for the plurality of tubes when the plurality of tubes are bent or wound in the circular shape. As a result, when the plurality of tubes are bent or wound in the circular shape, it is possible to suppress some or all of the plurality of tubes from being broken.
[11] In the tube unit according to [10], a bending strength of the auxiliary member may be higher than a bending strength of each of the plurality of tubes. In the tube unit, since the bending strength of the auxiliary member is higher than the bending strength of each of the plurality of tubes, it is possible to further suppress some or all of the plurality of tubes from being broken when the plurality of tubes are bent or wound in the circular shape.
[12] In the tube unit according to [10] or [11], a length of the auxiliary member from the first bundling portion to the second bundling portion may be from 95% to 105% of a length of the plurality of tubes from the first bundling portion to the second bundling portion. In the tube unit, since the length of the auxiliary member from the first bundling portion to the second bundling portion is from 95% to 105% of the length of the plurality of tubes from the first bundling portion to the second bundling portion, the auxiliary member can extend along substantially the entire region of the plurality of tubes. As a result, when the plurality of tubes are bent or wound in the circular shape, it is possible to further suppress some or all of the plurality of tubes from being broken.
[13] A deaeration module according to an aspect of the present disclosure is a deaeration module that performs degassing of a liquid. The deaeration module includes the tube unit according to any one of [1] to [12], and a housing that houses the tube unit. Each of the plurality of tubes is a tubular film through which gas permeates but liquid does not permeate, and the housing includes an internal-space through hole that communicates with an internal space of each of the plurality of tubes and into which the bundling portion of the tube unit is inserted, and an external-space through hole that communicates with an external space of the plurality of tubes.

In the deaeration module, a liquid supplied to the deaeration module is degassed as a result of supplying the liquid to one of the internal-space through hole and the external-space through hole while suctioning the liquid from the other one of the internal-space through hole and the external-space through hole. Since the bundling portion of the tube unit described above is connected to the internal-space through hole, it is possible to suppress a gap from being formed between the bundling portion and the housing.

[14] In the deaeration module according to [13], the housing may further include a connector in which the internal-space through hole is formed, and the bundling portion may be connected to the connector. In the deaeration module, since the bundling portion is connected to the connector in which the internal-space through hole is formed, it is possible to easily connect the bundling portion to the housing while suppressing a gap from being formed between the bundling portion and the connector.

[15] In the deaeration module according to [13] or [14], the plurality of tubes may be wound in a circular shape. In the deaeration module, since the plurality of tubes are wound in the circular shape, the length of the plurality of tubes can be sufficiently secured even if the housing is small. Therefore, for example, even when the plurality of tubes having low gas permeability are used, high degassing performance can be obtained.

[16] A method for producing a tube unit according to an aspect of the present disclosure is a method for producing a tube unit in which end portions of a plurality of tubes are bundled together. The method includes bundling of bundling the end portions of the plurality of tubes together with an auxiliary member extending in a solid rod shape.

In the method for producing the tube unit, the end portions of the plurality of tubes are bundled together with the auxiliary member extending in the solid rod shape. The auxiliary member is bundled together with the plurality of tubes as the dummy of the tube. As a result, the flattening of the bundling portion can be suppressed.

[17] In the method for producing the tube unit according to [16], the bundling includes inner sleeve fitting of externally fitting an inner sleeve made of a hot-melt resin to at least one of the end portions of the plurality of tubes, outer sleeve fitting of externally fitting an outer sleeve made of a heat-shrinkable resin to the end portions of the plurality of tubes and the auxiliary member, and heating of, after the inner sleeve fitting and the outer sleeve fitting, heating the inner sleeve and the outer sleeve to shrink the outer sleeve and melt the inner sleeve. In the method for producing the tube unit, the inner sleeve is externally fitted to the at least one of the end portions of the plurality of tubes, the outer sleeve is externally fitted to the end portions of the plurality of tubes and the auxiliary member, and the inner sleeve and the outer sleeve are heated to shrink the outer sleeve and melt the inner sleeve. As a result, the end portions of the plurality of tubes and the auxiliary member are collected by the shrinking outer sleeve and bundled by the hot-melt resin of the inner sleeve. In this way, the end portions of the plurality of tubes and the auxiliary member can be easily bundled.

[18] In the method for producing the tube unit according to [17], in the outer sleeve fitting, the end portions of the plurality of tubes and the auxiliary member are arranged inside the outer sleeve to form a honeycomb-like structure. In the method for producing the tube unit, since the end portions of the plurality of tubes and the auxiliary member are arranged inside the outer sleeve so as to form the honeycomb-like structure, when the inner sleeve and the outer sleeve are heated, flattening of the shrinking outer sleeve can be suppressed. As a result, flattening of the bundling portion can be suppressed.

[19] In the method for producing the tube unit according to [17] or [18], in the outer sleeve fitting, the end portions of the plurality of tubes and the auxiliary member are arranged in a regular polygonal shape inside the outer sleeve. In the method for producing the tube unit, since the end portions of the plurality of tubes and the auxiliary member are arranged inside the outer sleeve in the regular polygonal shape, when the inner sleeve and the outer sleeve are heated, flattening of the shrinking outer sleeve can be suppressed. As a result, flattening of the bundling portion can be suppressed.

### ADVANTAGEOUS EFFECTS OF INVENTION

According to an aspect of the present disclosure, it is possible to suppress flattening of a bundling portion that bundles a plurality of tubes.

### BRIEF DESCRIPTION OF DRAWINGS

FIG. 1 is a schematic cross-sectional view illustrating a deaeration module according to a first embodiment.
FIG. 2 is a schematic cross-sectional view illustrating the tube unit according to the first embodiment.
FIG. 3 is a schematic cross-sectional view taken along a line III-III illustrated in FIG. 2.
FIG. 4 is a schematic cross-sectional view taken along a line IV-IV illustrated in FIG. 3.
FIG. 5 is a schematic cross-sectional view, corresponding to FIG. 3, of another example.
FIG. 6 is a schematic cross-sectional view, corresponding to FIG. 3, of another example.
FIG. 7 is a schematic cross-sectional view illustrating an example of a relationship between a bundling portion and an auxiliary member.
FIG. 8 is a diagram for explaining a tube bundling method.
FIG. 9 is a diagram for explaining the tube bundling method.
FIG. 10 is a diagram for explaining the tube bundling method.
FIG. 11 is a diagram for explaining the tube bundling method.
FIG. 12 is a schematic cross-sectional view illustrating a state in which a tube unit of a comparative example is connected to a connector.
FIG. 13 is a schematic cross-sectional view illustrating a state in which a tube unit of another example is connected to the connector.
FIG. 14 is a schematic cross-sectional view illustrating a deaeration module according to a second embodiment.
FIG. 15 is a schematic cross-sectional view illustrating a tube unit according to a second embodiment.
FIG. 16 is a schematic cross-sectional view illustrating a state in which the tube unit illustrated in FIG. 15 is linearly extended.

### DESCRIPTION OF EMBODIMENTS

Hereinafter, a tube unit, a deaeration module, and a method for producing the tube unit according to embodiments will be described in detail with reference to the drawings. In all the drawings, the same or corresponding parts are denoted by the same reference signs, and redundant descriptions are omitted.

### First Embodiment

### Deaeration Module

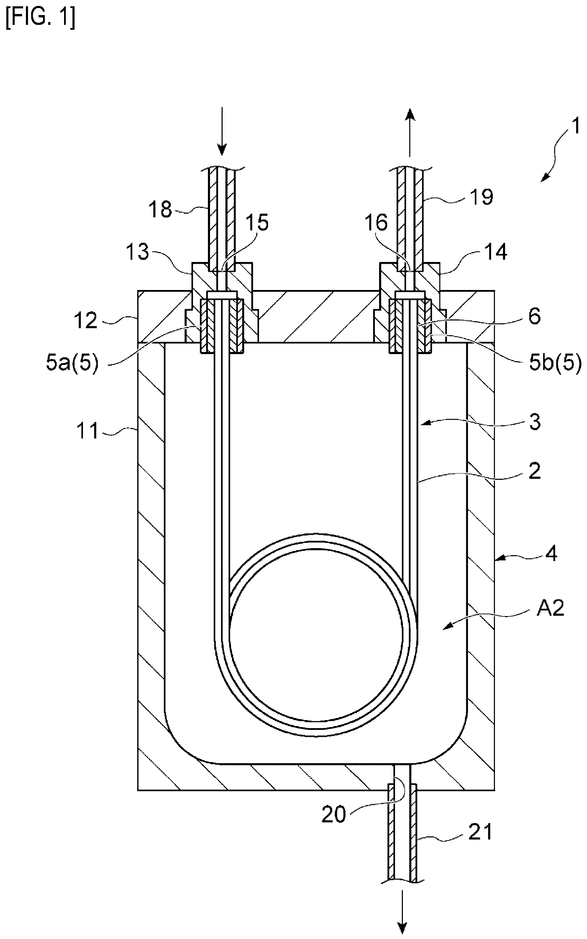

FIG. 1 is a schematic cross-sectional view illustrating a deaeration module according to a first embodiment. As illustrated in FIG. 1, a deaeration module 1 is a module that performs degassing of a liquid. The deaeration module 1 includes a tube unit 3 in which both end portions of a plurality of tubes 2 are bundled by a first bundling portion 5a and a second bundling portion 5b, and a housing 4 that houses the tube unit 3.

A liquid to be degassed by the deaeration module 1 is not particularly limited. When the deaeration module 1 is used for degassing a liquid in liquid chromatography, examples of the liquid to be degassed by the deaeration module 1 include nitrile solvents such as acetonitrile, ketone solvents such as acetone, and ester solvents such as ethyl acetate, which are used as a solvent for high-performance liquid chromatography "HIL-SOL", a solvent for large-scale preparative liquid chromatography "Presol" by Kanto Chemical Co., Inc, or the like, for example.

The tube 2 is a tubular film through which gas permeates but liquid does not permeate. The material, film shape, film form, and the like of the tube 2 are not particularly limited. Examples of the material of the tube 2 include fluorine resins such as polytetrafluoroethylene (PTFE), tetrafluoroethyleneperfluoroalkyl vinyl ether copolymer (PFA), tetrafluoroethylenehexafluoropropylene copolymer (FEP), tetrafluoroethylene-ethylene copolymer (ethylene copolymer resin) (ETFE), polychlorotrifluoroethylene (PCTFE), amorphous fluoropolymer (amorphous fluorine resin; AF), and polyvinylidene fluoride (PVDF), polypropylene (PP), polymethylpentene (PMP), silicon, polyimide, and polyamide. Examples of the amorphous fluoropolymer include Teflon (registered trademark) AF.

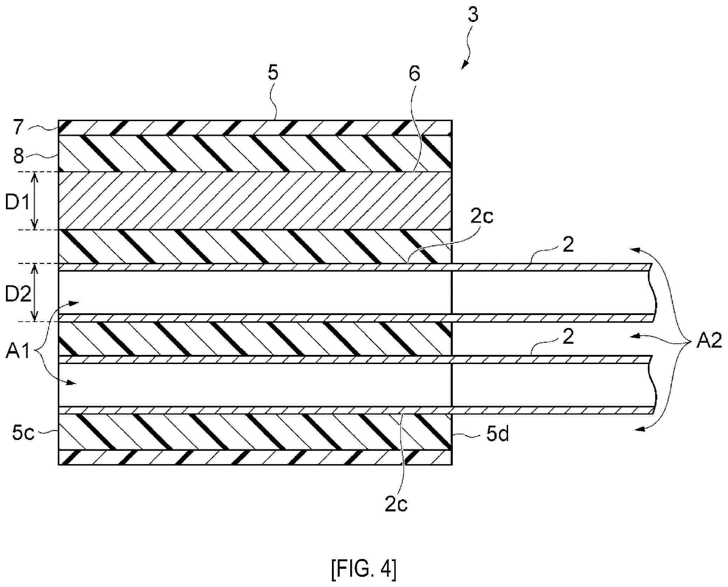

In the deaeration module 1, the inside of the housing 4 is divided by the plurality of tubes 2 into two regions, namely, an internal space A1 of each of the plurality of tubes 2 and an external space A2 of the plurality of tubes 2 (see FIG. 4). The deaeration module 1 of the present embodiment is an internal perfusion-type deaeration module. The internal space A1 is a region to which the liquid is supplied, and the external space A2 is a region in which suction (depressurization) is performed. In the deaeration module 1, the liquid is supplied to the internal space A1 of each of the plurality of tubes 2, and the external space A2 of the plurality of tubes 2 is suctioned (depressurized) to degas the liquid. However, the deaeration module 1 may also be an external perfusion-type deaeration module. When the deaeration module 1 is the external perfusion-type deaeration module, the internal space A1 is a region in which suction (depressurization) is performed, and the external space A2 is a region to which the liquid is supplied. In the external perfusion-type deaeration module 1, the liquid is supplied to the external space A2 of the plurality of tubes 2, and the internal space A1 of each of the plurality of tubes 2 is suctioned (degassed) to degas the liquid.

The housing 4 includes a housing main body 11, a lid portion 12, a first connector 13, and a second connector 14.

The housing main body 11 is a container having an opening in one end surface thereof. The housing main body 11 is formed in a cylindrical shape, for example. The lid portion 12 is airtightly joined to the housing main body 11 to close the opening of the housing main body 11. The housing main body 11 and the lid portion 12 can be joined to each other by, for example, welding, screwing, fitting, or the like. If there is no problem in terms of production, the housing 4 need not necessarily be separated into the housing main body 11 and the lid portion 12, but may be integrally formed.

The first connector 13 and the second connector 14 are airtightly connected to the lid portion 12. The first connector 13 and the second connector 14 can be connected to the lid portion 12 by, for example, welding, screwing, fitting, or the like.

The first connector 13 is connected to the first bundling portion 5a of the tube unit 3. In the first connector 13, an internal-space first through hole 15 is formed that communicates with the internal space A1 of each of the plurality of tubes 2 and that penetrates the inside and outside of the housing 4. The first bundling portion 5a is connected to the first connector 13 in a state of being inserted into the internal-space first through hole 15. The first connector 13 and the first bundling portion 5a can be connected to each other by, for example, welding, screwing, fitting, or the like. The first connector 13 is joined to a first pipe 18 that communicates with the internal space A1 of each of the plurality of tubes 2 via the internal-space first through hole 15. The first connector 13 and the first pipe 18 can be joined to each other by, for example, welding, screwing, fitting, or the like.

The second connector 14 is connected to the second bundling portion 5b of the tube unit 3. In the second connector 14, an internal-space second through hole 16 is formed that communicates with the internal space A1 of each of the plurality of tubes 2 and that penetrates the inside and outside of the housing 4. The second bundling portion 5b is connected to the second connector 14 in a state of being inserted into the internal-space second through hole 16. The second connector 14 and the second bundling portion 5b can be connected to each other by, for example, welding, screwing, fitting, or the like. The second connector 14 is joined to a second pipe 19 that communicates with the internal space A1 of each of the plurality of tubes 2 via the internal-space first through hole 15. The first connector 13 and the second pipe 19 can be joined to each other by welding, screwing, fitting, or the like, for example.

In the housing main body 11, an external-space through hole 20 is formed that penetrates the inside and outside of the housing 4. The external-space through hole 20 communicates with the external space A2 of the plurality of tubes 2 in the housing 4. The housing main body 11 is joined to a third pipe 21 that communicates with the external space A2 of the plurality of tubes 2 in the housing 4 via the external-space through hole 20. Therefore, by connecting a suction pump (not illustrated) to the third pipe 21 and operating the suction pump, the external space A2 of the plurality of tubes 2 in the housing 4 can be depressurized. The housing main body 11 and the third pipe 21 can be joined to each other by, for example, welding, screwing, fitting, or the like.

### Tube Unit

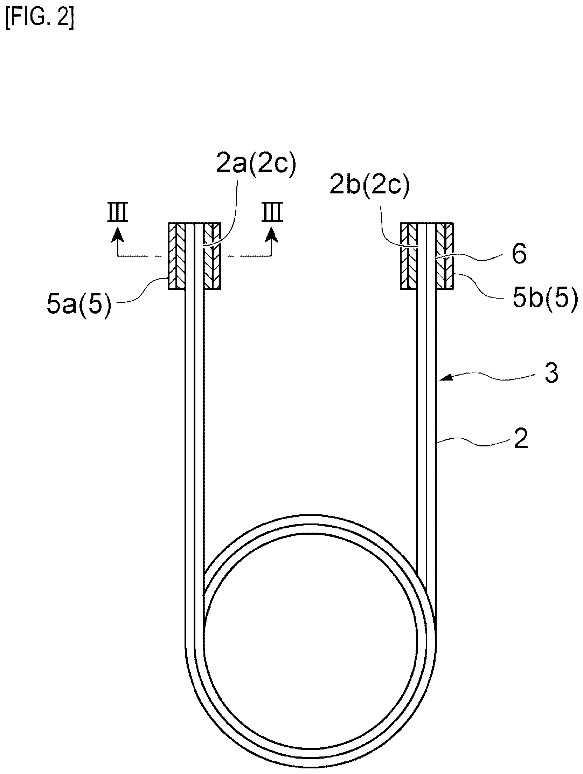

The tube unit 3 will be described in detail with reference to FIGS. 2 to 4.

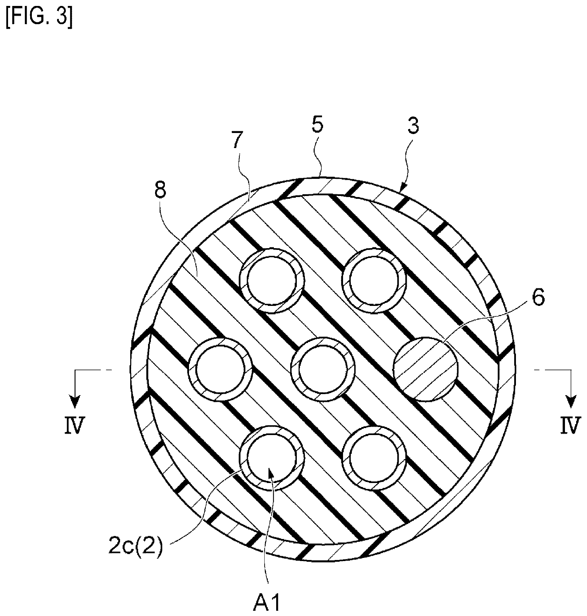

FIG. 2 is a schematic perspective view illustrating the tube unit according to the first embodiment, and FIG. 3 is a schematic cross-sectional view taken along a line III-III illustrated in FIG. 2. FIG. 4 is a schematic cross-sectional view taken along a line IV-IV illustrated in FIG. 3. As illustrated in FIGS. 2 to 4, the tube unit 3 includes the plurality of tubes 2, the first bundling portion 5a that bundles first end portions 2a that are end portions on one side of the plurality of tubes 2, a second bundling portion 5b that bundles second end portions 2b that are end portions on the other side of the plurality of tubes 2, and one or a plurality of auxiliary members 6 that extend in a solid rod shape and are bundled by each of the first bundling portion 5a and the second bundling portion 5b together with the plurality of tubes 2.

The first bundling portion 5a is positioned at an end portion on one side of the tube unit 3 and connected to the first connector 13 of the housing 4. The second bundling portion 5b is positioned at an end portion on the other side of the tube unit 3 and connected to the second connector 14 of the housing 4. Since the first bundling portion 5a and the second bundling portion 5b have the same configuration, in the following description, the first bundling portion 5a and the second bundling portion 5b will be collectively described as bundling portions 5, unless particularly described separately. Similarly, since the first end portion 2a and the second end portion 2b have the same configuration, in the following description, the first end portion 2a and the second end portion 2b are collectively described as end portions 2c, unless particularly described separately. However, they may have configurations different from each other. Of both end surfaces of the bundling portion 5, an end surface positioned at the leading end of the tube unit 3 is referred to as a first end surface 5c, and an end surface positioned on the side opposite to the leading end of the tube unit 3 is referred to as a second end surface 5d.

The bundling portion 5 bundles the end portions 2c of the plurality of tubes 2 and the auxiliary member 6 so as to surround the end portions 2c of the plurality of tubes 2 and the auxiliary member 6. The bundling portion 5 includes an outer cylinder 7 externally fitted to the end portions 2c of the plurality of tubes 2 and the auxiliary member 6, and a sealing portion 8 filled between the end portions 2c of the plurality of tubes 2, the auxiliary member 6, and the outer cylinder 7.

The outer cylinder 7 is formed in a substantially cylindrical shape and forms the outermost layer of the bundling portion 5. The outer cylinder 7 is a portion connected to the first connector 13 or the second connector 14 of the housing 4. The material of the outer cylinder 7 is preferably a thermoplastic resin, more preferably a thermoplastic resin having a melting temperature higher than that of the sealing portion 8, and even more preferably a thermoplastic resin excellent in chemical resistance and solvent resistance and having a melting temperature higher than that of the sealing portion 8. Examples of the material of the outer cylinder 7 include fluorine resins such as PFA and PTFE.

The sealing portion 8 bundles the end portions 2c of the plurality of tubes 2 and the auxiliary member 6, and seals between the end portions 2c of the plurality of tubes 2, the auxiliary member 6, and the outer cylinder 7. The sealing portion 8 is not filled in the internal space A1 of each of the plurality of tubes 2, but is filled between the end portions 2c of the plurality of tubes 2 and the auxiliary member 6 and between the end portions 2c of the plurality of tubes 2 and the auxiliary member 6, and the outer cylinder 7. Therefore, only the internal space A1 of each of the plurality of tubes 2 is open at the first end surface 5c of the bundling portion 5. Since the sealing portion 8 is filled between the end portions 2c of the plurality of tubes 2 and the auxiliary member 6, the end portions 2c of the plurality of tubes 2 and the auxiliary member 6 are separated from each other. The material of the sealing portion 8 is preferably a thermoplastic resin, more preferably a thermoplastic resin having a melting temperature lower than that of the material (thermoplastic resin) used for the outer cylinder 7 and the tubes 2 (end portions 2c), and even more preferably a thermoplastic resin excellent in chemical resistance and solvent resistance and having a melting temperature lower than that of the material (thermoplastic resin) used for the outer cylinder 7 and the tubes 2 (end portions 2c). Examples of the material of the sealing portion 8 include fluorine resins such as FEP and PFA.

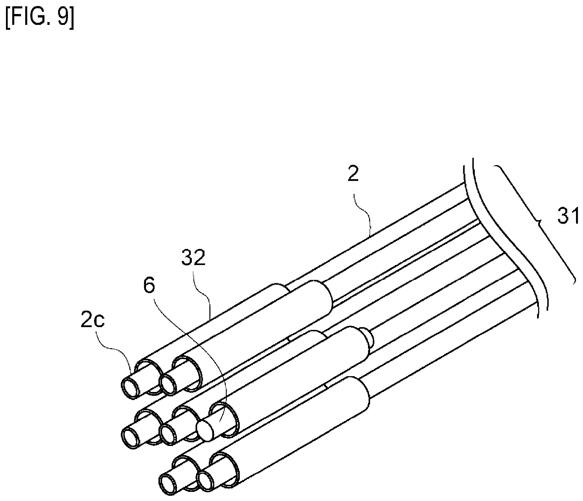

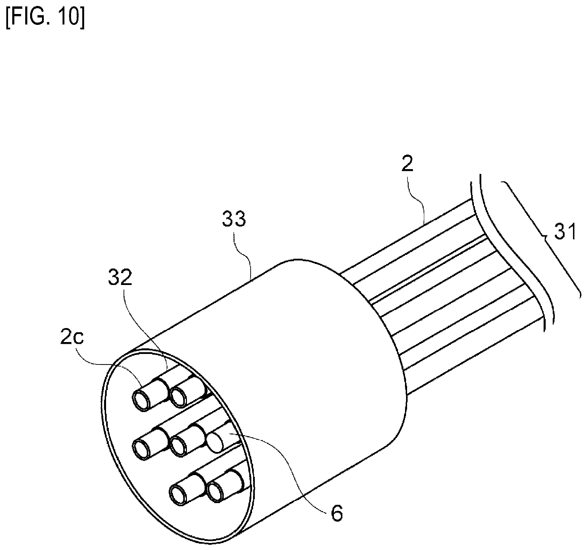

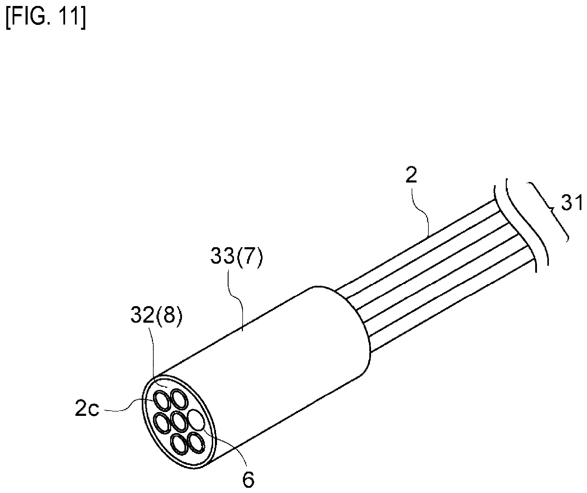

For example, as will be described later, the bundling portion 5 is formed by heating and melting an inner sleeve 32 (see FIGS. 9 and 10) that serves as the sealing portion 8 and heating and shrinking an outer sleeve 33 (see FIGS. 10 and 11) that serves as the outer cylinder 7. When the bundling portion 5 is heated at the time of formation, the bundling portion 5 shrinks while containing the end portions 2c of the plurality of tubes 2 and the auxiliary member 6 therein, to bundle the end portions 2c of the plurality of tubes 2 and the auxiliary member 6. Thus, the melting point of the sealing portion 8 is set to be higher than the melting points of the plurality of tubes 2, the auxiliary member 6, and the outer cylinder 7.

The auxiliary member 6 is a member that serves as a dummy of the tube 2 and is bundled by the bundling portion 5 (the first bundling portion 5a or the second bundling portion 5b) together with the plurality of tubes 2. In the present embodiment, the auxiliary member 6 bundled by the first bundling portion 5a and the auxiliary member 6 bundled by the second bundling portion 5b are separate members. The auxiliary member 6 does not extend from the first bundling portion 5a to the second bundling portion 5b.

Incidentally, since the bundling portion 5 is connected to the first connector 13 or the second connector 14 of the housing 4, the bundling portion 5 is preferably not flattened. The bundling portion 5 not being flattened includes a case in which the bundling portion 5 is flattened only to such an extent that no gap is formed between the bundling portion 5 and the first connector 13 or the second connector 14 when the bundling portion 5 is connected to the first connector 13 or the second connector 14. However, as described above, at the time when the bundling portion 5 is formed, the outer sleeve 33 that serves as the outer cylinder 7 shrinks while containing the end portions 2c of the plurality of tubes 2 and the auxiliary member 6 therein. Therefore, when the auxiliary member 6 is not provided, depending on the number of the plurality of tubes 2, the bundling portion 5 is flattened and a gap is likely to be formed between the bundling portion 5 and the first connector 13 or the second connector 14. For example, when the number of the tubes 2 is two, the bundling portion 5 is significantly flattened, and a large gap is likely to be formed between the bundling portion 5 and the first connector 13 or the second connector 14.

Therefore, in the present embodiment, the auxiliary member 6 is bundled by the bundling portion 5 together with the plurality of tubes 2, as the dummy of the tube 2. The auxiliary member 6 that serves as the dummy of the tube 2 is provided so that the bundling portion 5 can be suppressed from being flattened when the bundling portion 5 is formed.

The number of the auxiliary members 6 bundled by the bundling portion 5 together with the plurality of tubes 2 is not particularly limited, and can be appropriately selected in accordance with the number of the tubes 2 bundled by the bundling portion 5 so that the flattening of the bundling portion 5 can be suppressed. The arrangement of the plurality of tubes 2 and the auxiliary member 6 bundled by the bundling portion 5 is not particularly limited, and can be appropriately selected according to the number of the tubes 2 bundled by the bundling portion 5 so that the flattening of the bundling portion 5 can be suppressed.

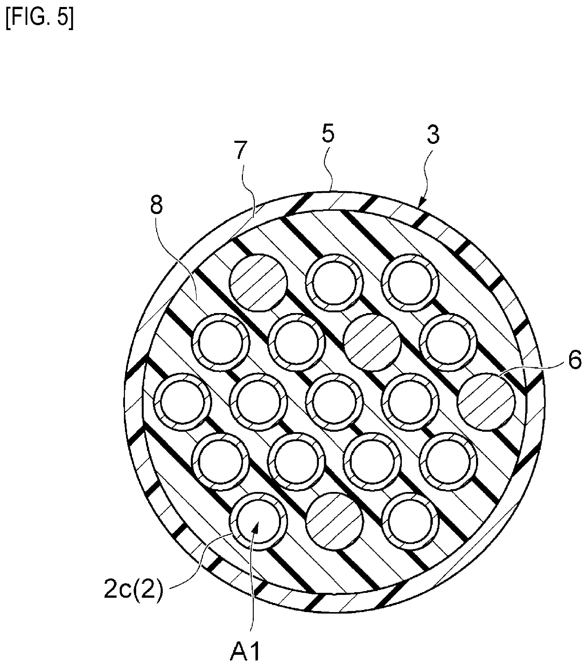

For example, from the viewpoint of suppressing the flattening of the bundling portion 5, the end portions 2c of the plurality of tubes 2 and the auxiliary member 6 are preferably arranged so as to form a honeycomb-like structure. The end portions 2c of the plurality of tubes 2 and the auxiliary member 6 being arranged so as to form the honeycomb-like structure means that, as illustrated in FIG. 3, any one of the end portions 2c of the plurality of tubes 2 and the auxiliary member 6 is arranged at each one of chosen positions arranged in a regular hexagonal shape without gaps therebetween. In this case, the total number of the end portions 2c of the tubes 2 and the auxiliary member 6 bundled by the bundling portion 5 may be, for example, 7, 19, or the like. FIG. 3 illustrates an example in which the end portions 2c of six of the tubes 2 and one of the auxiliary members 6 are bundled by the bundling portion 5 so that the end portions 2c of the plurality of tubes 2 and the auxiliary member 6 are arranged to form the honeycomb-like structure. FIG. 5 illustrates an example in which the end portions 2c of fifteen of the tubes 2 and four of the auxiliary members 6 are arranged to form the honeycomb-like structure by bundling the end portions 2c of the fifteen tubes 2 and the four auxiliary members 6 by the bundling portion 5. FIG. 5 is a schematic cross-sectional view, corresponding to FIG. 3, of another example.

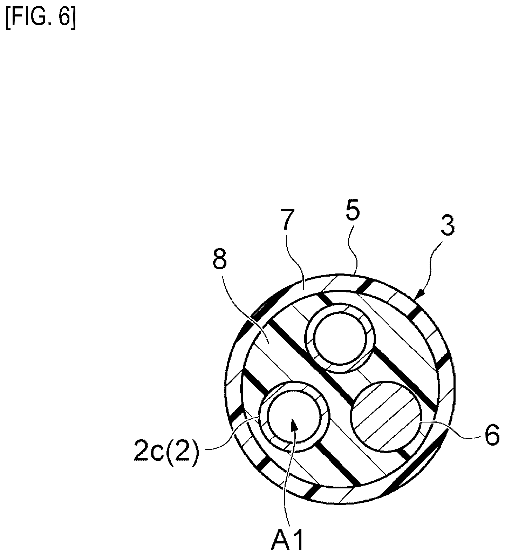

For example, from the viewpoint of suppressing the flattening of the bundling portion 5, the end portions 2c of the plurality of tubes 2 and the auxiliary member 6 are preferably arranged in a regular polygonal shape. The end portions 2c of the plurality of tubes 2 and the auxiliary member 6 being arranged in a regular polygonal shape means that, as illustrated in FIG. 3, the end portions 2c of the plurality of tubes 2 and the auxiliary member 6 are arranged so that the overall outer shape of the end portions 2c of the plurality of tubes 2 and the auxiliary member 6 is a regular polygonal shape. The regular polygonal shape may be, for example, an equilateral triangular shape, a regular quadrangular shape, a regular pentagonal shape, a regular hexagonal shape, or a regular octagonal shape. In this case, the total number of the end portions 2c of the tubes 2 and the auxiliary members 6 bundled by the bundling portion 5 may be, for example, 3, 7, 19, or the like. FIG. 6 illustrates an example in which the end portions 2c of the plurality of tubes 2 and the auxiliary member 6 are arranged in an equilateral triangle shape by bundling the end portions 2c of two of the tubes 2 and one of the auxiliary members 6 by the bundling portion 5. FIG. 6 is a schematic cross-sectional view, corresponding to FIG. 3, of another example. FIG. 3 illustrates an example in which the end portions 2c of the plurality of tubes 2 and the auxiliary member 6 are arranged in a regular hexagonal shape by bundling the end portions 2c of the six tubes 2 and the one auxiliary member 6 by the bundling portion 5. FIG. 5 illustrates an example in which the end portions 2c of fifteen of the tubes 2 and four of the auxiliary members 6 are arranged in a regular hexagonal shape by bundling the end portions 2c of the fifteen tubes 2 and the four auxiliary members 6 by the bundling portion 5.

From the viewpoint of appropriately functioning as the dummy of the tube 2, the auxiliary member 6 preferably has a circular outer peripheral surface similarly to that of the tube 2. In this case, an outer diameter D1 of the auxiliary member 6 is, for example, preferably from 50% to 150% and more preferably from 70% to 120% of an outer diameter D2 of each of the plurality of tubes 2. The outer diameter D1 of the auxiliary member 6 can be appropriately adjusted in accordance with the shape or length of the housing 4 or the tube 2.

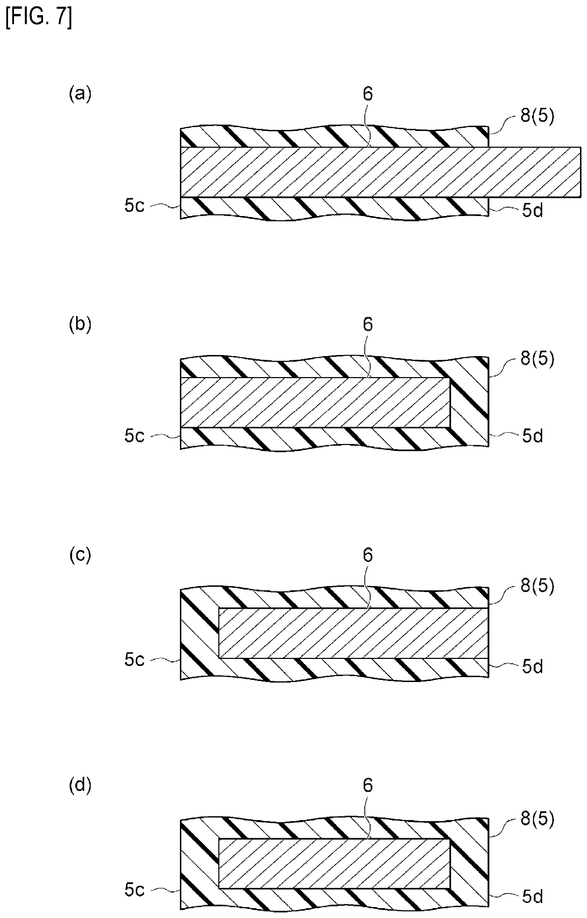

As long as the auxiliary member 6 is bundled by the bundling portion 5 together with the plurality of tubes 2, the length of the auxiliary member 6 and the position of the auxiliary member 6 in the bundling portion 5 are not particularly limited. For example, as illustrated in FIG. 4, both ends of the auxiliary member 6 may be positioned at the first end surface 5c and the second end surface 5d of the bundling portion 5 and exposed from the bundling portion 5. As in the example illustrated in FIG. 7(a), the leading end on one side of the auxiliary member 6 may be positioned at the first end surface 5c of the bundling portion 5 and exposed from the bundling portion 5. The leading end on the other side of the bundling portion 5 may protrude from the second end surface 5d of the bundling portion 5. As in the example illustrated in FIG. 7(b), the leading end on the one side of the auxiliary member 6 may be positioned at the first end surface 5c of the bundling portion 5 and exposed from the bundling portion 5. The leading end on the other side of the bundling portion 5 may be embedded in the bundling portion 5 at a position recessed from the second end surface 5d of the bundling portion 5. As in the example illustrated in FIG. 7(c), the leading end on the one side of the auxiliary member 6 may be embedded in the bundling portion 5 at a position recessed from the first end surface 5c of the bundling portion 5. The leading end on the other side of the auxiliary member 6 may be positioned at the second end surface 5d of the bundling portion 5 and exposed from the bundling portion 5. As in the example illustrated in FIG. 7(d), both the ends of the auxiliary member 6 may be embedded in the bundling portion 5 so as to be recessed from the first end surface 5c and the second end surface 5d of the bundling portion 5. FIGS. 7(a), 7(b), 7(c), and 7(d) are schematic cross-sectional views illustrating examples of a relationship between the bundling portion and the auxiliary member.

As the material of the auxiliary member 6, for example, a material having chemical resistance and solvent resistance is preferable. Examples of the material of the auxiliary member 6 include ceramics such as zirconia and alumina, and metals such as stainless steel (stainless steel such as SUS316, stainless steel coated with a fluorine resin, and the like). The material of the auxiliary member 6 may be a resin material such as a cured product of a thermoplastic resin or a thermosetting resin having a melting temperature higher than that of the material constituting the sealing portion 8. Examples of the resin material of the auxiliary member 6 include polyamide, polyimide, polyetheretherketone (PEEK), polyphenylene sulfide (PPS), ETFE, FEP, PFA, and PTFE.

As illustrated in FIG. 1, in the deaeration module 1, the first bundling portion 5a and the second bundling portion 5b are connected to the first connector 13 and the second connector 14 in a state in which the plurality of tubes 2 are wound in a circular shape. The number of windings of the plurality of tubes 2 is not particularly limited and is appropriately selected in accordance with a required degassing performance. Circularly wound portions of the plurality of tubes 2 may be bundled with a clip or the like in order to maintain the circularly wound state. The circularly wound portions may be bundled at one position or at a plurality of positions.

When degassing of a liquid is performed using the deaeration module 1 having the above-described configuration, the liquid is supplied to the first pipe 18 and discharged from the second pipe 19 while the external space A2 of the plurality of tubes 2 in the housing 4 is suctioned (depressurized) by the suction pump connected to the third pipe 21. Then, the liquid supplied to the first pipe 18 is supplied to the internal space A1 of each of the plurality of tubes 2 via the internal-space first through hole 15 of the first connector 13. At this time, since the external space A2 of the plurality of tubes 2 in the housing 4 is in a depressurized state, when the liquid passes through the internal space A1 of each of the plurality of tubes 2, dissolved gas and bubbles of the liquid permeate through each of the plurality of tubes 2 and are drawn into the external space A2 of the plurality of tubes 2 in the housing 4. In this way, degassing of the liquid is performed. The degassed liquid is discharged to the second pipe 19 via the internal-space second through hole 16 of the second connector 14. The liquid may be supplied from the second pipe 19 and discharged from the first pipe 18.

### Method for Producing Tube Unit

An example of a method for producing the tube unit 3 will be described.

In a method for producing the tube unit 3 according to the present embodiment, an inner sleeve fitting step, an outer sleeve fitting step, and a heating step are performed. The inner sleeve fitting step, the outer sleeve fitting step, and the heating step are bundling steps for bundling the end portions of the plurality of tubes 2. In the following description, the inner sleeve fitting step, the outer sleeve fitting step, and the heating step are performed in this order. However, these steps may be performed in any order.

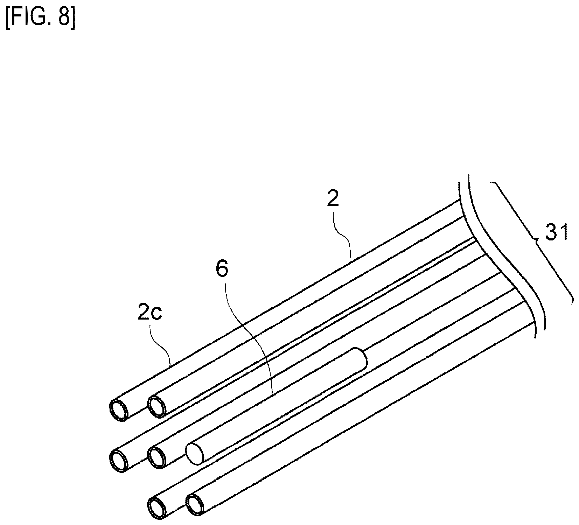

As illustrated in FIG. 8, in the inner sleeve fitting step, the plurality of tubes 2 and the auxiliary member 6 are prepared. As illustrated in FIG. 9, in the inner sleeve fitting step, the inner sleeve 32 made of a hot-melt resin is externally fitted to each of the end portions 2c of the plurality of tubes 2 and the auxiliary member 6. The inner sleeve 32 is heated and melted to form the sealing portion 8. The hot-melt resin forming the inner sleeve 32 is a resin that melts and obtains fluidity when heated to the melting point thereof or higher. The hot-melt resin is preferably a resin that shrinks when heated to the vicinity of the melting point thereof and melts when heated to the melting point thereof or higher. The melting point of the hot-melt resin is preferably lower than the melting points of the plurality of tubes 2 and the auxiliary member 6, and is preferably lower than the decomposition temperatures of the plurality of tubes 2 and the auxiliary member 6. The hot-melt resin may be the same resin as the sealing portion 8. The inner peripheral length of the inner sleeve 32 is equal to or greater than the outer peripheral lengths of the plurality of tubes 2 and the auxiliary member 6, and is preferably greater than the outer peripheral lengths of the plurality of tubes 2 and the auxiliary member 6.

In the inner sleeve fitting step, subsequently, the inner sleeves 32 are heated and shrunk, and the inner sleeves 32 are temporarily fixed to the end portions 2c of the plurality of tubes 2 and the auxiliary member 6. The heating temperature for temporarily fixing the inner sleeves 32 is equal to or lower than the melting point of the inner sleeve 32, and is preferably lower than the melting point of the inner sleeve 32. In this way, it is possible to suppress the inner sleeves 32 from becoming detached from the end portions 2c of the plurality of tubes 2 and the auxiliary member 6. However, when the detachment of the inner sleeve 32 is not a problem, the inner sleeve 32 need not necessarily be heated and shrunk to temporarily fix the inner sleeve 32.

As illustrated in FIG. 10, in the outer sleeve fitting step, the outer sleeve 33 made of a heat-shrinkable resin is externally fitted to an end portion of a tube bundle 31 in which the plurality of tubes 2 and the auxiliary member 6 are bundled together. The outer sleeve 33 is heated and shrunk to form the outer cylinder 7. The heat-shrinkable resin forming the outer sleeve 33 is a resin that shrinks when heated to the vicinity of the melting point thereof and melts and obtains fluidity when heated to the melting point thereof or higher. The melting point of the heat-shrinkable resin is higher than the melting point of the hot-melt resin forming the inner sleeve 32. The melting point of the heat-shrinkable resin is preferably lower than the melting point of the plurality of tubes 2, and is also preferably lower than the decomposition temperature of the plurality of tubes 2. The heat-shrinkable resin may be the same resin as the outer cylinder 7. The inner peripheral length of the outer sleeve 33 is preferably equal to or greater than the outer peripheral length of the tube bundle 31.

In the outer sleeve fitting step, the end portions 2c of the plurality of tubes 2 and the auxiliary member 6 are arranged inside the outer sleeve 33 so as to form the honeycomb-like structure. Alternatively, in the outer sleeve fitting step, the end portions 2c of the plurality of tubes 2 and the auxiliary member 6 are arranged in a regular polygonal shape inside the outer sleeve 33.

As illustrated in FIG. 11, in the heating step, the inner sleeves 32 and the outer sleeve 33 are heated to shrink the outer sleeve 33 and melt the inner sleeves 32. In the heating step, the inner sleeves 32 and the outer sleeve 33 are heated at a temperature higher than the melting point of the hot-melt resin of the inner sleeve 32 and lower than the melting point of the heat-shrinkable resin of the outer sleeve 33. Then, the outer sleeve 33 shrinks to narrow the intervals between the end portions 2c of the plurality of tubes 2, the auxiliary member 6, and the outer sleeve 33. The hot-melt resin of the inner sleeves 32 melts and flows to seal between the end portions 2c of the plurality of tubes 2, the auxiliary member 6, and the outer sleeve 33. At this time, by adjusting the wall thickness or the like of the inner sleeve 32, it is possible to appropriately seal between the end portions 2c of the plurality of tubes 2, the auxiliary member 6, and the outer sleeve 33. When the area between them is large, the thickness of the inner sleeve 32 is increased. When the area between them cannot be sealed only by the hot-melt resin of the inner sleeves 32 due to an insufficient amount of the resin, the area between them can be sealed by arranging the inner sleeves 32 in multiple layers, or additionally arranging a member made of the same hot-melt resin as the inner sleeves 32.

From the viewpoint of suppressing the outer sleeve 33 from becoming detached from the tube bundle 31, before performing the heating step, the outer sleeve 33 may be heated and slightly shrunk to temporarily fix the outer sleeve 33 to the tube bundle 31. In this case, the heating temperature of the outer sleeve 33 is equal to or lower than the melting point of the outer sleeve 33, and is preferably lower than the melting point of the outer sleeve 33. However, when the detachment of the outer sleeve 33 is not a problem, the outer sleeve 33 need not necessarily be melted and shrunk to temporarily fix the outer sleeve 33.

In this way, the tube unit 3 in which the end portions 2c of the plurality of tubes 2 and the auxiliary member 6 are bundled by the bundling portion 5 is completed.

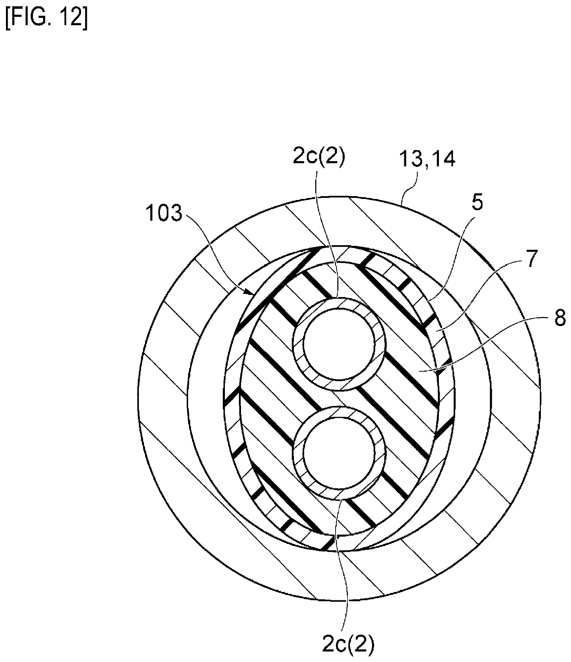

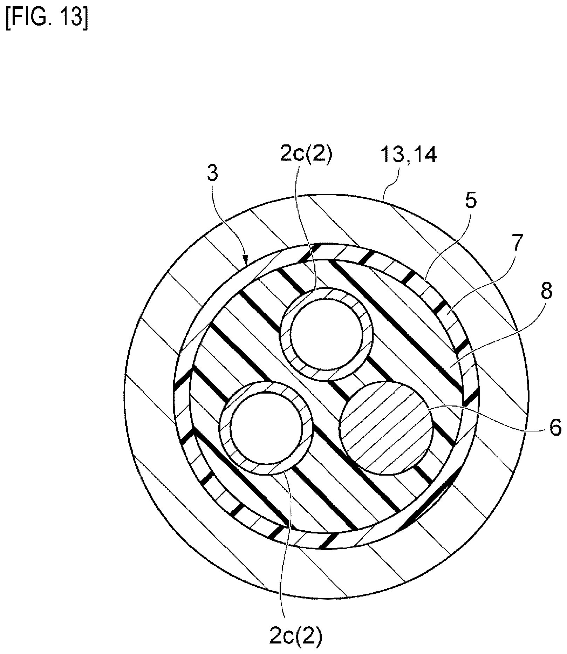

FIG. 12 is a schematic cross-sectional view illustrating a state in which a tube unit of a comparative example is connected to the connector. FIG. 13 is a schematic cross-sectional view illustrating a state in which the tube unit of another example is connected to the connector.

As illustrated in FIG. 12, a tube unit 103 of the comparative example does not include the auxiliary member, and only the end portions 2c of two of the tubes 2 are bundled by the bundling portion 5. Therefore, at the time of forming the bundling portion 5, the outer sleeve 33 that serves as the outer cylinder 7 shrinks while containing the end portions 2c of the two tubes 2 therein. Thus, the bundling portion 5 is significantly flattened, and a large gap is likely to be formed between the bundling portion 5 and the first connector 13 or the second connector 14.

In contrast, as illustrated in FIG. 13, in the tube unit 3 of the other example, two of the tubes 2 and one of the auxiliary members 6 are bundled by the bundling portion 5, and the two tubes 2 and the one auxiliary member 6 are arranged so as to form the honeycomb-like structure and are arranged in an equilateral triangular shape. Therefore, at the time of forming the bundling portion 5, even if the outer sleeve 33 that serves as the outer cylinder 7 shrinks while containing the end portions 2c of the two tubes 2 and the auxiliary member 6 therein, the bundling portion 5 is unlikely to be flattened, and a gap is unlikely to be formed between the bundling portion 5 and the first connector 13 or the second connector 14.

In this way, in the tube unit 3 according to the present embodiment, the auxiliary member 6 extending in the solid rod shape is bundled by the bundling portion 5 together with the end portions 2c of the plurality of tubes 2. The auxiliary member 6 is bundled by the bundling portion 5 together with the end portions 2c of the plurality of tubes 2, as the dummy of the tube 2. Therefore, even if the number of the tubes 2 is small, the bundling portion 5 can be easily formed into a circular shape. As a result, the flattening of the bundling portion 5 can be suppressed.

In the tube unit 3, even when the flattening of the bundling portion 5 cannot be sufficiently suppressed by only one of the auxiliary members 6, the flattening of the bundling portion 5 can be sufficiently suppressed by providing a plurality of the auxiliary members 6.

In the tube unit 3, by arranging the end portions 2c of the plurality of tubes 2 and the auxiliary member 6 to form the honeycomb-like structure, the flattening of the bundling portion 5 can be suppressed.

In the tube unit 3, by arranging the end portions 2c of the plurality of tubes 2 and the auxiliary member 6 in a regular polygonal shape, the flattening of the bundling portion 5 can be suppressed.

In the tube unit 3, since the auxiliary member 6 has the circular outer peripheral surface and the outer diameter of the auxiliary member 6 is from 50% to 150% or from 70% to 120% of the outer diameter of each of the plurality of tubes 2, the auxiliary member 6 can be appropriately used as the dummy of the tube 2.

In the tube unit 3, since the sealing portion 8 is filled between the end portions 2c of the plurality of tubes 2, the auxiliary member 6, and the outer cylinder 7, when a fluid such as a liquid or a gas is supplied from the first end surface 5c of the bundling portion 5, the fluid can be suppressed from leaking out between the end portion 2c of the plurality of tubes 2, the auxiliary member 6, and the outer cylinder 7.

In the tube unit 3, the melting point of the sealing portion 8 is lower than the melting points of the plurality of tubes 2, the auxiliary member 6, and the outer cylinder 7. Thus, at the time of producing the tube unit 3, it is possible to melt the sealing portion 8 without melting the plurality of tubes 2, the auxiliary member 6, and the outer cylinder 7 by performing heating at a temperature higher than the melting point of the sealing portion 8 and lower than the melting points of the plurality of tubes 2, the auxiliary member 6, and the outer cylinder 7. As a result, the sealing portion 8 can be appropriately filled between the plurality of tubes 2, the auxiliary member 6, and the outer cylinder 7 while appropriately maintaining a state in which the outer cylinder 7 is externally fitted to the plurality of tubes 2 and the auxiliary member 6.

In the tube unit 3, since the end portions 2c of the plurality of tubes 2 and the auxiliary member 6 are separated from each other, the end portions 2c of the plurality of tubes 2 and the auxiliary member 6 obtain a state of being covered with the sealing portion 8. As a result, it is possible to further suppress leakage of the fluid from boundary surfaces of the end portions 2c of the plurality of tubes 2 and the auxiliary member 6.

In the tube unit 3, since the plurality of tubes 2 contain the fluorine resin, chemical resistance can be improved.

In the deaeration module 1 according to the present embodiment, a liquid supplied to the deaeration module 1 is degassed as a result of supplying the liquid to the internal-space first through hole 15 while suctioning the liquid from the external-space through hole 20. Since the bundling portion 5 of the tube unit 3 described above is connected to the internal-space first through hole 15 and the internal-space second through hole 16, it is possible to suppress a gap from being formed between the bundling portion 5 and the housing 4.

In the deaeration module 1, since the bundling portion 5 of the tube unit 3 is connected to the first connector 13 in which the internal-space first through hole 15 is formed, and the second connector 14 in which the internal-space second through hole 16 is formed, it is possible to easily connect the bundling portion 5 to the housing 4 while suppressing a gap from being formed between the bundling portion 5 and the first connector 13 and the second connector 14.

In the deaeration module 1, since the plurality of tubes 2 are wound in the circular shape, the length of the plurality of tubes 2 can be sufficiently secured even if the housing 4 is small. Therefore, for example, even when the plurality of tubes 2 having low gas permeability are used, high degassing performance can be obtained.

In the method for producing the tube unit according to the present embodiment, the end portions 2c of the plurality of tubes 2 are bundled together with the auxiliary member 6 extending in the solid rod shape. The auxiliary member 6 is bundled together with the plurality of tubes 2 as the dummy of the tube 2. Therefore, even if the number of the tubes 2 is small, the flattening of the bundling portion 5 can be suppressed.

In the method for producing the tube unit, the inner sleeve 32 is externally fitted to each of the end portions 2c of the plurality of tubes 2 and the auxiliary member 6, the outer sleeve 33 is externally fitted to the end portions 2c of the plurality of tubes 2 and the auxiliary member 6, and the inner sleeves 32 and the outer sleeve 33 are heated to shrink the outer sleeve 33 and melt the inner sleeves 32. As a result, the end portions 2c of the plurality of tubes 2 and the auxiliary member 6 are collected by the shrinking outer sleeve 33 and bundled by the hot-melt resin of the inner sleeves 32. In this way, the end portions 2c of the plurality of tubes 2 and the auxiliary member 6 can be easily bundled.

In the method for producing the tube unit, since the end portions 2c of the plurality of tubes 2 and the auxiliary member 6 are arranged inside the outer sleeve 33 so as to form the honeycomb-like structure, or the end portions 2c of the plurality of tubes 2 and the auxiliary member 6 are arranged in a regular polygonal shape, when the inner sleeves 32 and the outer sleeve 33 are heated, flattening of the shrinking outer sleeve 33 can be suppressed. As a result, the flattening of the bundling portion 5 can be suppressed.

### Second Embodiment

A second embodiment will be described. A deaeration module and a tube unit according to the second embodiment are basically the same as the deaeration module and the tube unit according to the first embodiment, and are different from the deaeration module and the tube unit according to the first embodiment in that the auxiliary member extends from the first bundling portion to the second bundling portion. Therefore, hereinafter, only matters different from the deaeration module and the tube unit according to the first embodiment will be described, and description of matters similar to the deaeration module and the tube unit according to the first embodiment will be omitted.

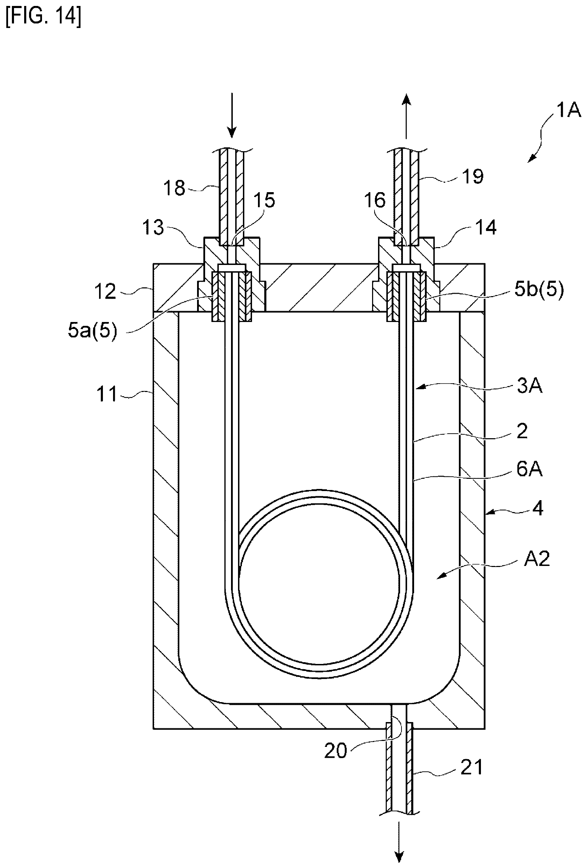

FIG. 14 is a schematic cross-sectional view illustrating the deaeration module according to the second embodiment. As illustrated in FIG. 14, a deaeration module 1A according to the second embodiment includes a tube unit 3A in which both the end portions of the plurality of tubes 2 are bundled by the first bundling portion 5a and the second bundling portion 5b, and the housing 4 that houses the tube unit 3A.

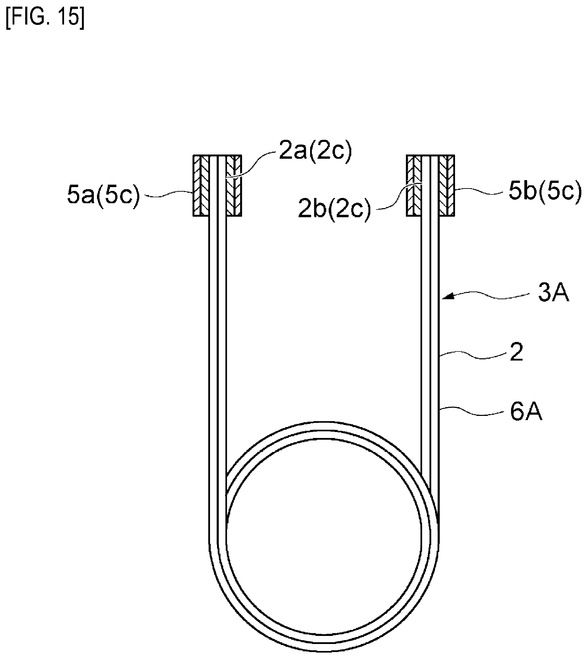

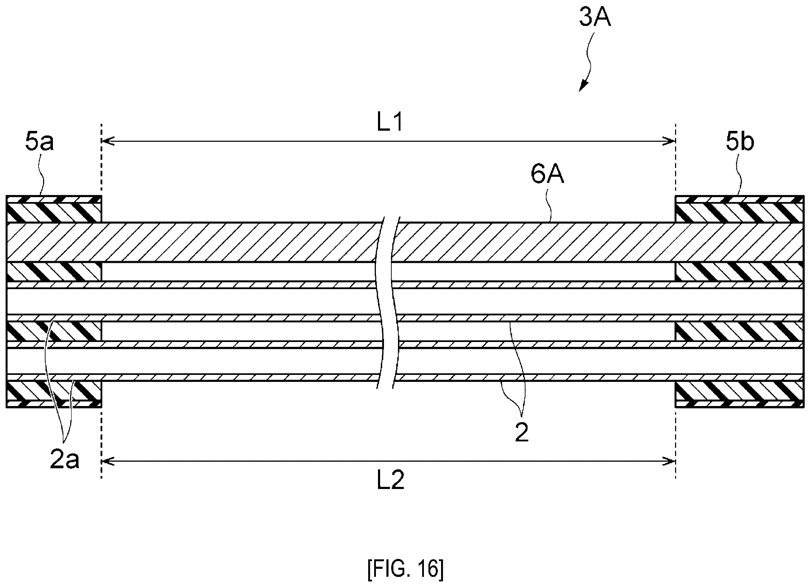

FIG. 15 is a schematic cross-sectional view illustrating the tube unit according to the second embodiment. FIG. 16 is a schematic cross-sectional view illustrating a state in which the tube unit illustrated in FIG. 15 is linearly extended. As illustrated in FIGS. 15 and 16, the tube unit 3A according to the second embodiment includes the plurality of tubes 2, the first bundling portion 2a that bundles the first end portions 5a of the plurality of tubes 2, the second bundling portion 2b that bundles the second end portions 5b of the plurality of tubes 2, and one or a plurality of auxiliary members 6A that extend in a solid rod shape and are bundled by the first bundling portion 5a and the second bundling portion 5b together with the plurality of tubes 2.

Similarly to the auxiliary member 6 of the first embodiment, the auxiliary member 6A is a member that is bundled by the first bundling portion 5a and the second bundling portion 5b together with the plurality of tubes 2, as a dummy of the tube 2. Unlike the auxiliary member 6 of the first embodiment, the auxiliary member 6A extends from the first bundling portion 5a to the second bundling portion 5b. An end portion on one side of the auxiliary member 6A is bundled by the first bundling portion 5a together with the first end portions 2a of the plurality of tubes 2, and an end portion on the other side of the auxiliary member 6A is bundled by the second bundling portion 5b together with the second end portions 2b of the plurality of tubes 2.

Incidentally, when the plurality of tubes 2 are bent or wound in the circular shape to be housed in the housing 4 or the like, there is a possibility that some or all of the plurality of tubes 2 may be broken. Further, the thinner the thickness of each of the plurality of tubes 2, the smaller the diameter of each of the plurality of tubes 2, and the smaller the number of the plurality of tubes 2, the more likely it is that some or all of the plurality of tubes 2 may be broken.

Thus, in the present embodiment, in order to suppress some or all of the plurality of tubes 2 from being broken when the plurality of tubes 2 are bent or wound in the circular shape, the auxiliary member 6A extends from the first bundling portion 5a to the second bundling portion 5b, and the auxiliary member 6A also functions as a guide member or a reinforcing member for the plurality of tubes 2.

The auxiliary member 6A is circularly wound together with the plurality of tubes 2. The length of the auxiliary member 6A is not particularly limited. However, from the viewpoint of causing the auxiliary member 6A to extend along the plurality of tubes 2, a length L1 of the auxiliary member 6A is from the first bundling portion 5a to the second bundling portion 5b, for example, preferably from 95% to 105% and more preferably from 99% to 101% of a length L2 of the plurality of tubes 2 from the first bundling portion 5a to the second bundling portion 5b.

The bending strength of the auxiliary member 6A is not particularly limited. From the viewpoint of suppressing some or all of the plurality of tubes 2 from being broken when the plurality of tubes 2 are bent or wound in the circular shape, the bending strength of the auxiliary member 6A is preferably higher than the bending strength of each of the plurality of tubes 2. The buckling load of the auxiliary member 6A is preferably larger than the buckling load of each of the plurality of tubes 2.

The number of the auxiliary members 6A, the outer diameter of the auxiliary member 6A, the arrangement thereof in the first bundling portion 5a and the second bundling portion 5b, and the like can be the same as those of the auxiliary member 6 of the first embodiment. A method for producing the tube unit 3A can be the same as the method for producing the tube unit 3 of the first embodiment.

As described above, in the tube unit 3A according to the present embodiment, since the auxiliary member 6A extends from the first bundling portion 5a to the second bundling portion 5b, the auxiliary member 6 serves as the guide member or the reinforcing member for the plurality of tubes 2 when the plurality of tubes 2 are bent or wound in the circular shape. As a result, when the plurality of tubes 2 are bent or wound in the circular shape, it is possible to suppress some or all of the plurality of tubes 2 from being broken.

In the tube unit 3A, since the bending strength of the auxiliary member 6A is higher than the bending strength of each of the plurality of tubes 2, it is possible to further suppress some or all of the plurality of tubes 2 from being broken when the plurality of tubes 2 are bent or wound in the circular shape.

In the tube unit 3A, since the length L1 of the auxiliary member 6A from the first bundling portion 5a to the second bundling portion 5b is from 95% to 105% or from 99% to 101% of the length L2 of the plurality of tubes 2 from the first bundling portion 5a to the second bundling portion 5b, the auxiliary member 6A can extend along substantially the entire region of the plurality of tubes 2. As a result, when the plurality of tubes 2 are bent or wound in the circular shape, it is possible to further suppress some or all of the plurality of tubes 2 from being broken.

Although the embodiments of the present disclosure have been described above, the present disclosure is not limited to the above-described embodiments.

For example, in the present embodiment described above, the deaeration module is of the internal perfusion-type, and degassing of the liquid is performed by causing the liquid to flow from the internal-space first through hole 15 to the internal-space second through hole 16 while suctioning air from the external-space through hole 20. However, the deaeration module may also be of the external perfusion-type. In this case, for example, two external-space through holes, including an external-space first through hole and an external-space second through hole, may be formed as the external-space through hole, one through hole may be formed as the internal-space through hole, and degassing of the liquid may be performed by flowing the liquid from the external-space first through hole to the internal-space second through hole while suctioning air from the internal-space through hole.

In the embodiment described above, the inner sleeve 32 is externally fitted to each of the end portion 2c of the plurality of tubes 2 and the auxiliary member 6. However, the inner sleeve 32 may be externally fitted to at least one of the end portions 2c of the plurality of tubes 2.

In the embodiment described above, the housing 4 includes the first connector 13 and the second connector 14, and the first bundling portion 5a and the second bundling portion 5b of the tube unit 3 are connected to the first connector 13 and the second connector 14 of the housing 4. However, the housing may not include the connector, and the first bundling portion 5a and the second bundling portion 5b of the tube unit 3 may be directly connected to the housing. A cylindrical attachment may be attached to the first bundling portion 5a and the second bundling portion 5b of the tube unit 3, and the first bundling portion 5a and the second bundling portion 5b of the tube unit 3 may be connected to the first connector 13 and the second connector 14 of the housing 4 via the attachment. In this case, when the bundling portion is flattened, the gap between the housing and the bundling portion is formed between the bundling portion and the attachment or between the attachment and the connector, for example.

### REFERENCE SIGNS LIST

1 Deaeration module, 1A Deaeration module, 2 Tube, 2a First end portion, 2b Second end portion, 2c End portion, 3 Tube unit, 3A Tube unit, 4 Housing, 5 Bundling portion, 5a First bundling portion, 5b Second bundling portion, 5c First end surface, 5d Second end surface, 6 Auxiliary member, 6A Auxiliary member, 7 Outer cylinder, 8 Sealing portion, 11 Housing main body, 12 Lid portion, 13 First connector, 14 Second connector, 15 Internal-space first through hole (internal-space through hole), 16 Internal-space second through hole (internal-space through hole), 18 First pipe, 19 Second pipe, 20 External-space through hole, 21 Third pipe, 31 Tube bundle, 32 Inner sleeve, 33 Outer sleeve, 103 Tube unit, A1 Internal space, A2 External space, D1 Outer diameter, D2 Outer diameter.

## Claims

1. A tube unit comprising:
a plurality of tubes;
a bundling portion that bundles end portions of the plurality of tubes; and
an auxiliary member extending in a solid rod shape and bundled by the bundling portion together with the end portions of the plurality of tubes.

2. The tube unit according to claim 1, comprising
a plurality of the auxiliary members.

3. The tube unit according to claim 1, wherein
the end portions of the plurality of tubes and the auxiliary member are arranged to form a honeycomb-like structure.

4. The tube unit according to claim 1, wherein
the end portions of the plurality of tubes and the auxiliary member are arranged in a regular polygonal shape.

5. The tube unit according to claim 1, wherein
the auxiliary member has a circular outer peripheral surface, and
an outer diameter of the auxiliary member is from 50% to 150% of an outer diameter of each of the plurality of tubes.

6. The tube unit according to claim 1, wherein
the bundling portion includes
an outer cylinder externally fitted to the end portions of the plurality of tubes and the auxiliary member, and
a sealing portion filled between the end portions of the plurality of tubes, the auxiliary member, and the outer cylinder.

7. The tube unit according to claim 6, wherein
a melting point of the sealing portion is lower than melting points of the plurality of tubes, the auxiliary member, and the outer cylinder.

8. The tube unit according to claim 6, wherein
the end portions of the plurality of tubes and the auxiliary member are separated from each other.

9. The tube unit according to claim 1, wherein
the plurality of tubes contain a fluorine resin.

10. The tube unit according to claim 1, wherein
the bundling portion includes
a first bundling portion that bundles the end portions on one side of the plurality of tubes, and
a second bundling portion that bundles the end portions on another side of the plurality of tubes, and
the auxiliary member extends from the first bundling portion to the second bundling portion.

11. The tube unit according to claim 10, wherein
a bending strength of the auxiliary member is higher than a bending strength of each of the plurality of tubes.

12. The tube unit according to claim 10, wherein
a length of the auxiliary member from the first bundling portion to the second bundling portion is from 95% to 105% of a length of the plurality of tubes from the first bundling portion to the second bundling portion.

13. A deaeration module that performs degassing of a liquid, the deaeration module comprising:
the tube unit according to any one of claims 1 to 12; and
a housing that houses the tube unit, wherein
each of the plurality of tubes is a tubular film through which gas permeates but liquid does not permeate, and
the housing includes
an internal-space through hole that communicates with an internal space of each of the plurality of tubes and into which the bundling portion of the tube unit is inserted, and
an external-space through hole that communicates with an external space of the plurality of tubes.

14. The deaeration module according to claim 13, wherein
the housing further includes a connector in which the internal-space through hole is formed, and
the bundling portion is connected to the connector.

15. The deaeration module according to claim 13, wherein
the plurality of tubes are wound in a circular shape.

16. A method for producing a tube unit in which end portions of a plurality of tubes are bundled together, the method comprising
bundling of bundling the end portions of the plurality of tubes together with an auxiliary member extending in a solid rod shape.

17. The method for producing the tube unit according to claim 16, wherein
the bundling includes
inner sleeve fitting of externally fitting an inner sleeve made of a hot-melt resin to at least one of the end portions of the plurality of tubes,
outer sleeve fitting of externally fitting an outer sleeve made of a heat-shrinkable resin to the end portions of the plurality of tubes and the auxiliary member, and
heating of, after the inner sleeve fitting and the outer sleeve fitting, heating the inner sleeve and the outer sleeve to shrink the outer sleeve and melt the inner sleeve.

18. The method for producing the tube unit according to claim 17, wherein
in the outer sleeve fitting, the end portions of the plurality of tubes and the auxiliary member are arranged inside the outer sleeve to form a honeycomb-like structure.

19. The method for producing the tube unit according to claim 17, wherein
in the outer sleeve fitting, the end portions of the plurality of tubes and the auxiliary member are arranged in a regular polygonal shape inside the outer sleeve.
